# EUROPEAN PATENT SPECIFICATION

(11) **EP 3 766 308 B1**
(45) Date of publication and mention of the grant of the patent: **26.10.2022**
(21) Application number: 18915944.5
(22) Date of filing: 27.04.2018
(51) Int. Cl.: H05B 45/50

(54) **POWER SUPPLIER CIRCUIT, CONTROLLING METHOD AND ELECTRONIC EQUIPMENT**
LEISTUNGSVERSORGUNGSSCHALTUNG, STEUERUNGSVERFAHREN UND ELEKTRONISCHE AUSRÜSTUNG
CIRCUIT D'ALIMENTATION ÉLECTRIQUE, PROCÉDÉ DE COMMANDE ET ÉQUIPEMENT ÉLECTRONIQUE

(43) Date of publication of application: 20.01.2021
(73) Proprietor: Tridonic GmbH & Co. KG, 6851 Dornbirn (AT)
(72) Inventor: CHEN, Zhiwen, Shenzhen, Guangdong 518109 (CN); MAO, Qiuxiang, Shenzhen, Guangdong 518109 (CN); LIU, Shengwei, Shenzhen, Guangdong 518109 (CN)
(74) Representative: Rupp, Christian
(86) International application number: PCT/CN2018/084740
(87) International publication number: WO 2019/205071

(56) References cited:
- WO-A1-2016/029675
- CN-A- 1 867 220
- CN-A- 101 893 167
- CN-A- 102 684 500
- GB-A- 2 490 418
- US-A1- 2002 109 468
- US-A1- 2007 040 516
- US-B2- 9 155 144

## Description

### TECHNICAL FIELD

Embodiments of the present disclosure generally relate to the field of power supplier, and more particularly, to a power supplier circuit, a controlling method and an electronic equipment.

### BACKGROUND

This section introduces aspects that may facilitate better understanding of the present disclosure. Accordingly, the statements of this section are to be read in this light and are not to be understood as admissions about what is in the prior art or what is not in the prior art.

In the field of lighting technology, a power supplier is needed to convert input voltage to output voltage. The input voltage may be AC (Alternating Current) voltage, and the output voltage may be DC voltage, which can be applied to a lighting device, such as LED (Light Emission Diode) etc. The power supplier may form a driver for a light source as a lighting device, such as a LED.

The power supplier may include a controller, which is used to control the converting. Startup current may be provided to a startup pin of the controller for starting the controller.

In related art, the startup pin of the controller may connect a startup resistor, the startup current flows through the startup resistor. Resistance of the startup resistor may be kept high enough, so that no enough energy will start the controller when the input AC voltage is turned off. Therefore, flicker of the lighting device when turning off can be avoided for AC voltage input. WO 2016/029675 A1 discloses an LED light driver device having a input detection unit which detects supply of either AC or DC power.

### SUMMARY

Inventor of this disclosure found the following limitation in related art: when the input voltage is DC voltage, startup current may sometimes be not large enough to start the controller due to the high resistance of the startup resistor. Therefore, the resistance of the startup resistor needs to be low enough, so that the startup current can be large enough to start the controller, when the input voltage is DC voltage.

In general, embodiments of the present disclosure provide a power supplier circuit, a controlling method and an electronic equipment. In the embodiments, type of input voltage may be detected, and the startup current is controlled according to the type. Therefore, the power supplier could work when input voltage is DC voltage, and avoid turn off flicker when input voltage is AC voltage.

In a first aspect, there is provided a power supplier circuit, includes:
a converting circuit, configured to convert input voltage to output voltage, the converting circuit comprising a controller, configured to control the converting, and a startup resistor, configured to provide startup current flowing through the startup resistor to the controller for starting the controlling;
an input voltage detector, configured to detect the input voltage is DC (Direct Current) voltage or AC (Alternating Current) voltage; and
a startup controlling circuit, configured to control the startup current provided to the controller, according to detecting result of the input voltage detector.

In an embodiment, the startup controlling circuit is configured to drain part of the current away from the startup resistor when the detecting result is the input voltage is AC voltage.

In an embodiment, , the startup controlling circuit is configured to provide the current flowing through the startup resistor to the controller as the startup current when the detecting result is the input voltage is DC voltage.

In an embodiment, the startup controlling circuit includes a draining resistor and a switching circuit, the draining resistor and the switching circuit are connected in series between a startup pin of the controller and a ground voltage node of the power supplier circuit, the startup pin is connected to the startup resistor, the switching circuit is configured to turn off or turn on according to the detecting result of the input voltage detector.

In an embodiment, the switching circuit is configured to turn on when the detecting result is the input voltage is AC voltage, and the switching circuit turns off when the detecting result is the input voltage is DC voltage.

In an embodiment, the switching circuit includes an optical coupler.

In an embodiment, the converting circuit includes a first input port and a second input port, which are used to receive the input voltage, the input voltage detector includes a first capacitor and a first diode connecting in serial between the second input port and a third input port of the startup controlling circuit, and the first input port connects to a fourth input port of the startup controlling circuit.

In an embodiment, the input voltage detector further includes a second diode connecting between the first input port and a connecting node of the first capacitor and the first diode.

In an embodiment, the input voltage detector further includes a second capacitor and a resistor connecting in parallel between the first input port and a connecting node of the first diode and the third input port.

In a second aspect, there is provided a controlling method of a power supplier circuit according to claim 12.

In a third aspect, there is provided an electronic equipment, includes the power supplier circuit according to the first aspect of the embodiments.

In a further aspect, there is provided a driver for a light source comprising a power supplier circuit according to the disclosure.

According to various embodiments of the present disclosure, type of input voltage may be detected, and the startup current is controlled according to the type. Therefore, the power supplier could work when input voltage is DC voltage, and avoid turn off flicker when input voltage is AC voltage.

### BRIEF DESCRIPTION OF THE DRAWINGS

The above and other aspects, features, and benefits of various embodiments of the disclosure will become more fully apparent, by way of example, from the following detailed description with reference to the accompanying drawings, in which like reference numerals or letters are used to designate like or equivalent elements. The drawings are illustrated for facilitating better understanding of the embodiments of the disclosure and not necessarily drawn to scale, in which:
Fig. 1 is a diagram of a power supplier circuit in accordance with an embodiment of the present disclosure;
Fig. 2 shows a flowchart of a controlling method 200 of the power supplier circuit.

### DETAILED DESCRIPTION

The present disclosure will now be discussed with reference to several example embodiments. It should be understood that these embodiments are discussed only for the purpose of enabling those skilled persons in the art to better understand and thus implement the present disclosure, rather than suggesting any limitations on the scope of the present disclosure.

As used herein, the terms "first" and "second" refer to different elements. The singular forms "a" and "an" are intended to include the plural forms as well, unless the context clearly indicates otherwise. The terms "comprises," "comprising," "has," "having," "includes" and/or "including" as used herein, specify the presence of stated features, elements, and/or components and the like, but do not preclude the presence or addition of one or more other features, elements, components and/or combinations thereof. The term "based on" is to be read as "based at least in part on." The term "one embodiment" and "an embodiment" are to be read as "at least one embodiment." The term "another embodiment" is to be read as "at least one other embodiment." Other definitions, explicit and implicit, may be included below.

In the description and drawings, particular embodiments of the disclosure have been disclosed in detail as being indicative of some of the ways in which the principles of the disclosure may be employed, but it is understood that the disclosure is not limited correspondingly in scope. Rather, the disclosure includes all changes, modifications and equivalents coming within the terms of the appended claims.

It should be emphasized that the term "compriscs/comprising" when used in this specification is taken to specify the presence of stated features, integers, steps or components but does not preclude the presence or addition of one or more other features, integers, steps, components or groups thereof.

Many aspects of the disclosure can be better understood with reference to the following drawings. The components in the drawings are not necessarily to scale, emphasis instead being placed upon clearly illustrating the principles of the present disclosure. To facilitate illustrating and describing some parts of the disclosure, corresponding portions of the drawings may be exaggerated in size, e.g., made larger in relation to other parts than in an exemplary device actually made according to the disclosure. Moreover, in the drawings, like reference numerals designate corresponding parts throughout the several views and may be used to designate like or similar parts in more than one embodiment.

### First aspect of embodiments

A power supplier circuit is provided in a first embodiment.

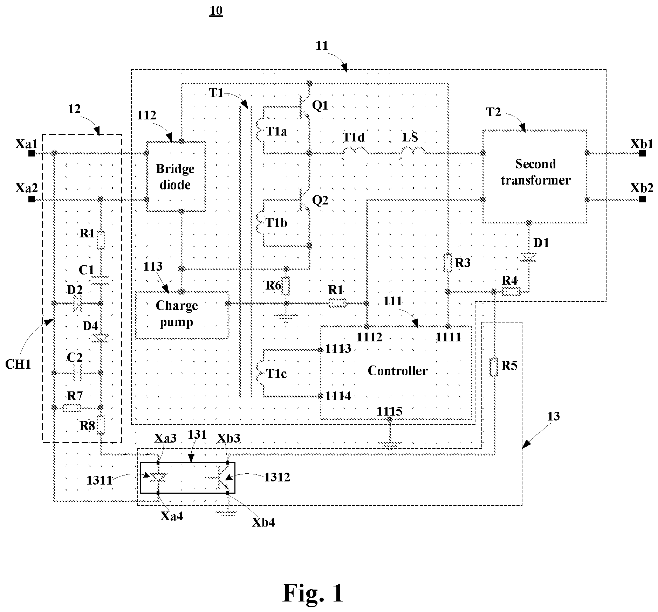

Fig. 1 is a diagram of a power supplier circuit in accordance with an embodiment of the present disclosure. As shown in Fig. 1, a power supplier circuit 10 includes a converter circuit 11, an input voltage detector 12, and startup controlling circuit 13.

In the embodiment, the converting circuit 11 is configured to convert input voltage to output voltage. The input voltage could be DC (Direct Current) voltage or AC (Alternating Current) voltage, for example, the input DC voltage may be 175V-280V, and the input AC voltage may be 198V-264V.

In the embodiment, the output voltage may be DC voltage, which can be applied to a light source as lighting device, such as LED (Light Emission Diode) etc. The power supply circuit with converting circuit 11 may form a driver for a light source, such as LED.

As shown in Fig. 1, the converting circuit 11 has a first input port Xa1 and a second input port Xa2, which are used to receive the input voltage. The converting circuit 11 has a first output port Xb1 and a second output port Xb2, which are used to output the output voltage. The output voltage provided on the first output port Xb1 and the second output port Xb2 may be supplied to a light source (not shown) such as a LED. Thereby the converting circuit 11 may provide a supply current to the light source connected to the first output port Xb1 and the second output port Xb2.

The converting of the converting circuit 11 is controlled by a controller 111 of the converting circuit 11. The controller 111 may be formed by an integrated circuit. Current that flows through a startup resistor R3 provides startup current to the controller 111 for starting the controlling. When the startup current is large enough, the controller 111 starts to work, and the converting circuit 11 starts to convert the input voltage to the output voltage.

In the embodiment, the input voltage detector 12 is configured to detect the input voltage is DC voltage or AC voltage. The startup controlling circuit 13 is configured to control the startup current provided to the controller 111, according to detecting result of the input voltage detector 12. For example, when the input voltage is DC voltage, the startup controlling circuit 13 may control the startup current to be large enough, so that the controller 111 could start to control the converting even when the input voltage is at the lowest level, such as 175V; when the input voltage is AC voltage, the startup controlling circuit 13 may control the startup current to be small enough when the input voltage is turned off, so that the controller 111 could not control the converting.

According to the embodiments, the startup current could be controlled according to type of the input voltage of the power supplier circuit. Therefore, the power supplier could start to work when input voltage is DC voltage, and avoid turn off flicker when input voltage is AC voltage.

In the embodiment, when the input voltage detector 12 detects the input voltage is AC voltage, the startup controlling circuit 13 may drain part of the current away from the startup resistor 3. For example, the startup controlling circuit 13 may form a conducting channel between the startup resistor 3 and ground voltage node of the power supplier circuit 10, so that part of the current drains through the conducting channel, and the remained current is provided into the controller 111 as the startup current.

In the embodiment, when the input voltage detector 12 detects the input voltage is DC voltage, the current flowing through the startup resistor R3 is provided to the controller 111 as the startup current. For example, the conducting channel is turned off, so that all the current that flows through startup resistor R3 is provided into the controller 111 as the startup current.

As shown in Fig. 1, the startup controlling circuit 13 may include a draining resistor R5 and a switching circuit 131, the draining resistor R5 and the switching circuit 131 connects in series between a startup pin 1111 of the controller 111 and the ground voltage node (GND) of the power supplier circuit 10. As shown in Fig. 1, the startup pin 1111 may connect to the startup resistor R3.

In the embodiment, the switching circuit 131 may turn off or turn on according to the detecting result of the input voltage detector 12. For example, when the input voltage detector 12 detects the input voltage is AC voltage, the switching circuit 131 turns on, therefore, part of the current drains through the draining resistor R5 and the switching circuit 131 to the ground voltage node. When the input voltage detector 12 detects the input voltage is DC voltage, the switching circuit 131 turns off, no current flows through the draining resistor R5 and the switching circuit 131 to the ground voltage node.

As shown in Fig. 1, the switching circuit 131 may have a third input port Xa3 and a fourth input port Xa4. The third input port Xa3 and the fourth input port Xa4 are used to connect to the input voltage detector 12. The switching circuit 131 may also have a third output port Xb3 and a fourth output port Xb4. The third output port Xb3 connects to the drain resistor R5, and the fourth output port Xb4 connects to the ground voltage port.

As shown in Fig. 1, the switching circuit 131 is an optical coupler (OC). The optical coupler may include a LED (Light Emitting Diode) 1311 and a transistor 1312. The LED 1311 connects between the third input port Xa3 and the fourth input port Xa4, the collector and emitter of the transistor 1312 connect to the third output port Xb3 and the fourth output port Xb4, respectively.

When the LED 1311 conducts, light emits from the LED 1311, the transistor 1312 conducts, and the conducting channel is turned on. The detecting result could control the LED 1311 to conduct, so that control the switching circuit 131 to turns on. For example, when the input voltage detector 12 detects the input voltage is AC voltage, the LED 1311 conducts, and the transistor 1312 conducts, i.e. the switching circuit 131 turns on; and when the input voltage detector 12 detects the input voltage is DC voltage, the LED 1311 does not conduct, and the transistor 1312 does not conduct, i.e. the switching circuit 131 turns off.

In the embodiment, Fig. 1 shows an example of the startup controlling circuit 13, however, the embodiment is not limited there to, the startup controlling circuit 13 may be of other kind, and the switching circuit 131 may be of other kind.

In the embodiment, the input voltage detector 12 connects between the first input port Xa1, the second input port Xa2 and the third input port Xa3, the fourth input port Xa4. Voltage difference between the third input port Xa3 and the fourth input port Xa4 could be regarded as the detecting result of the input voltage detector 12.

In an embodiment, as shown in Fig. 1, the input voltage detector 12 may include a first capacitor C1 and a first diode D4 connecting in serial between the second input port Xa2 and the third input port Xa3.

When the input voltage is DC voltage, the first capacitor C1 will block the DC voltage, and no voltage difference exist between the third input port Xa3 and the fourth input port Xa4, therefore, the switching circuit 131 turns off.

When the input voltage is AC voltage, the first capacitor C1 would not block the AC voltage, and the first diode D4 conducts during one half cycle of the AC voltage, so that voltage difference is built up between the third input port Xa3 and the fourth input port Xa4, and the switching circuit 131 turns on as a result.

As shown in Fig. 1, the input voltage detector 12 may further include a second capacitor C2 and a resistor R7 connecting in parallel between the first input port Xa1 and a connecting node of the first diode D4 and the third input port Xa3.

When the first diode D4 conducts during the one half cycle of the AC voltage, a voltage difference will be built on the resistor R7. During the one half cycle of the AC voltage, the second capacitor C2 may be charged. During the other half cycle of the AC voltage, the second capacitor C2 will be discharged, so that the voltage difference between the third input port Xa3 and the fourth input port Xa4 will gradually decrease, and the switching circuit 131 will keep turning on for a period of time during the other half cycle of the AC voltage.

As shown in Fig. 1, the input voltage detector 12 may further include a second diode D2 connecting between the first input port Xa1 and a connecting node of the first capacitor C1 and the first diode D4.

When the input voltage is AC voltage, the second diode D2 will conduct during the other half cycle of the AC voltage, so that current will flow from the first input port Xa1 to the second input port Xa2 through the second diode D2 and the first capacitor C1.

As shown in Fig. 1, the input voltage detector 12 may further include resistor R1 and resistor R8, which are used to restrict current from being too large.

As shown in Fig. 1, the first input port Xa1 may connect to the fourth input port Xa4 via a conducting channel CH1. In an embodiment, the conducting channel CH1 may just include conductive wire. In another embodiment, the conducting channel CH1 may further include at least one resistor.

In the embodiment, Fig. 1 shows an example of the input voltage detector 12, however, the embodiment is not limited there to, and the input voltage detector 12 may be of other kind.

In the embodiment, when the input voltage is AC voltage, the input voltage detector 12 will build a voltage difference between the third input port Xa3 and the fourth input port Xa4, and the startup controlling circuit 13 will drain current from the startup resistor R3, thus the startup current provided to the controller 111 will reduce. Therefore, when the input AC voltage is turned off, the startup current could be small enough to avoid start the controller 111, no output voltage would be applied to the lighting device, and turn off flicker of the lighting device will be avoided.

In the embodiment, when the input voltage is DC voltage, the input voltage detector 12 will not build a voltage difference between the third input port Xa3 and the fourth input port Xa4, and the startup controlling circuit 13 will not drain current from the startup resistor R3, thus the current flowing through the startup resistor R3 will be provided to the controller 111 as startup current. Therefore, even when the input voltage is at the lowest level, the startup current could be big enough to start the controller 111, and the converting circuit 11 will perform the converting operation.

In the embodiment, the controller 111 may be RED2422 or RED2402 provided by RediSem. As shown in Fig. 1, the controller 111 may include pins 1112, 1113, 1114, and 1115, these pins may work as CS pin, TX1 pin, TX2 pin, and GND pin which are described in RED2422 datasheet or RED2402 datasheet.

By using RED2422 or RED2402 as the controller 111, the advantages of RediSem platform, such as low ripple, low cost compared to two stages, will be utilized. However, the embodiment is not limited there to, the controller 111 may be other kind of chip.

As shown in Fig. 1, the converting circuit 11 may include other components, such as: a bridge diode 112, a charge pump 113, a first transformer T1 (including coils T1a, T1b and T1c), a second transformer T2, switches Q1 and Q2, inductors T1d and LS, resistors R1, R4 and R6, diode D1. The diode D1 may connect to an auxiliary coil of the second transformer T2. The converting circuit 11 is formed by resonant halfbridge whereby the switches Q1 and Q2 form the both switches of the halfbridge. The inductors T1d and LS together with the second transformer T2 may form a part of the resonant components of the resonant halfbridge circuit of the converting circuit 11. Further there may be a resonance capacitor placed in series or parallel to the second transformer T2. The resonance capacitor and the second transformer T2 and / or the inductors T1d and LS may form a LLC-or LCC resonant circuit. The inductors T1d and LS may be also integrated components of the second transformer T2. The controller 111 controls the operation of the switches Q1 and Q2, e,g, the switching frequency and / or switching time, and thus the operation of the converting circuit 11. The working principle of these components and the converting circuit 11 could be referred to related art.

As can be seen from the above mentioned embodiments, the startup current could be controlled according to type of the input voltage of the power supplier circuit. Therefore, the power supplier could start to work when input voltage is DC voltage, and avoid turn off flicker when input voltage is AC voltage. In addition, the advantages of RediSem platform could be utilized.

### Second aspect of embodiments

A controlling method of a power supplier circuit is provided. The power supplier circuit of the first aspect of embodiments is provided in an embodiment. The same contents as those in the first aspect of embodiments are omitted.

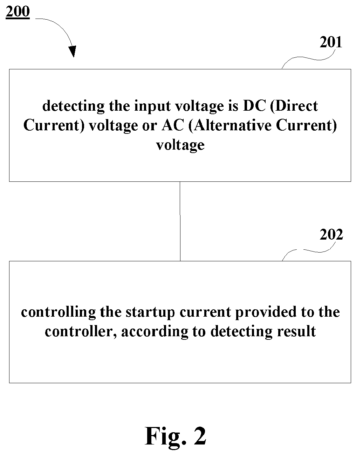

Fig. 2 shows a flowchart of a controlling method 200 of the power supplier circuit.

As shown in Fig. 2, the method 200 includes:
Block 201: detecting the input voltage is DC (Direct Current) voltage or AC (Alternative Current) voltage;
Block 202: controlling the startup current provided to the controller, according to detecting result.

As can be seen from the above mentioned embodiments, the startup current could be controlled according to type of the input voltage of the power supplier circuit. Therefore, the power supplier could start to work when input voltage is DC voltage, and avoid turn off flicker when input voltage is AC voltage.

### Third aspect of embodiments

An electronic equipment is provided in an embodiment. The electronic equipment includes a power supplier circuit according to the first aspect of embodiments.

In the embodiment, the electronic equipment may further include a lighting device, to which the output voltage of the power supplier circuit is provided. The lighting device may work when the input voltage is DC voltage. When the input AC voltage is turned off, the lighting device will not flicker.

Further, while operations are depicted in a particular order, this should not be understood as requiring that such operations be performed in the particular order shown or in sequential order, or that all illustrated operations be performed, to achieve desirable results. In certain circumstances, multitasking and parallel processing may be advantageous. Likewise, while several specific implementation details are contained in the above discussions, these should not be construed as limitations on the scope of the present disclosure, but rather as descriptions of features that may be specific to particular embodiments.

Although the present disclosure has been described in language specific to structural features and/or methodological acts, it is to be understood that the present disclosure defined in the appended claims is not necessarily limited to the specific features or acts described above. Rather, the specific features and acts described above are disclosed as example forms of implementing the claims.

## Claims

1. A power supplier circuit (10), comprising:
a converting circuit (11), configured to convert input voltage to output voltage, the converting circuit (11) comprising
a controller (111), configured to control the converting, and
a startup resistor (R3), configured to provide startup current flowing through the startup resistor (R3) to the controller (111) for starting the controlling;
an input voltage detector (12), configured to detect whether the input voltage is DC , direct current, voltage or AC , alternating current, voltage; and
a startup controlling circuit (13), configured to control the startup current provided to the controller (111), according to the detecting result of the input voltage detector (12).

2. The power supplier circuit (10) according to claim 1, wherein,
the startup controlling circuit (13) is configured to drain part of the current away from the startup resistor (R3) when the detecting result is that the input voltage is AC voltage.

3. The power supplier circuit (10) according to claim 1, wherein,
the startup controlling circuit (13) is configured to provide the current flowing through the startup resistor (R3) to the controller (111) as the startup current when the detecting result is that the input voltage is DC voltage.

4. The power supplier circuit (10) according to claim 2 or claim 3, wherein,
the startup controlling circuit (13) comprises a draining resistor (R5) and a switching circuit (131), the draining resistor (R5) and the switching circuit (131) are connected in series between a startup pin of the controller (111) and a ground voltage node of the power supplier circuit (10),
wherein, the startup pin is connected to the startup resistor (R3),
the switching circuit (131) is configured to turn off or turn on according to the detecting result of the input voltage detector (12).

5. The power supplier circuit (10) according to claim 4, wherein,
the switching circuit (131) is configured to turn on when the detecting result is that the input voltage is AC voltage, and
the switching circuit (131) is configured to turn off when the detecting result is that the input voltage is DC voltage.

6. The power supplier circuit (10) according to claim 4 or claim 5, wherein,
the switching circuit (131) comprises an optical coupler.

7. The power supplier circuit (10) according to claim 1, wherein,
the converting circuit (11) comprises a first input port (Xa1) and a second input port (Xa2), which are configured to receive the input voltage,
the input voltage detector (12) comprises a first capacitor (C1) and a first diode (D4) connected in serial between the second input port (Xa2) and a third input port (Xa3) of the startup controlling circuit (13), and
the first input port (Xa1) connects to a fourth input port (Xa4) of the startup controlling circuit (13).

8. The power supplier circuit (10) according to claim 7, wherein,
the input voltage detector (12) further comprises a second diode (D2) connected between the first input port (Xa1) and a connecting node of the first capacitor (C1) and the first diode (D4).

9. The power supplier circuit (10) according to claim 7, wherein,
the input voltage detector (12) further comprises a second capacitor (C2) and a resistor (R7) connected in parallel between the first input port (Xa1) and a connecting node of the first diode (D4) and the third input port (Xa3).

10. An electronic equipment, comprising the power supplier circuit (10) according to one of claims 1-9.

11. A driver for a light source comprising a power supplier circuit (10) according to one of claims 1-9.

12. A controlling method (200) of a power supplier circuit (10), the method (200) comprising:
converting by a converting circuit, input voltage to output voltage, whereby the converting circuit (11) comprises a controller (111) to control the converting;
providing a startup current to the controller for starting the controlling, whereby the startup current flows through a startup resistor (R3);
detecting, with a input voltage detector, whether the input voltage is DC, Direct Current, voltage or AC , Alternating Current, voltage;
and controlling with a startup controlling circuit the startup current provided to the controller (111), according to the detecting result of the input voltage detector (12).

## Patentansprüche

1. Stromversorgungsschaltung (10), umfassend:
eine Umwandlungsschaltung (11), die konfiguriert ist, um Eingangsspannung in Ausgangsspannung umzuwandeln, wobei die Umwandlungsschaltung (11) umfasst
eine Steuereinheit (111), die konfiguriert ist, um das Umwandeln zu steuern, und
einen Anlaufwiderstand (R3), der konfiguriert ist, um einen Anlaufstrom bereitzustellen, der durch den Anlaufwiderstand (R3) zu der Steuereinheit (111) fließt, um die Steuereinheit zu starten;
einen Eingangsspannungsdetektor (12), der konfiguriert ist, um zu erfassen, ob die Eingangsspannung DC-Spannung, Gleichstromspannung, oder AC-Spannung, Wechselstromspannung, ist; und
eine Anlaufsteuerschaltung (13), die konfiguriert ist, um den der Steuereinheit (111) bereitgestellten Anlaufstrom gemäß dem Erfassungsergebnis des Eingangsspannungsdetektors (12) zu steuern.

2. Stromversorgungsschaltung (10) nach Anspruch 1, wobei
die Anlaufsteuerschaltung (13) konfiguriert ist, um einen Teil des Stroms von dem Anlaufwiderstand (R3) abzuleiten, wenn das Erfassungsergebnis ist, dass die Eingangsspannung AC-Spannung ist.

3. Stromversorgungsschaltung (10) nach Anspruch 1, wobei
die Anlaufsteuerschaltung (13) konfiguriert ist, um den durch den Anlaufwiderstand (R3) zu der Steuereinheit (111) fließenden Strom als Anlaufstrom bereitzustellen, wenn das Erfassungsergebnis ist, dass die Eingangsspannung DC-Spannung ist.

4. Stromversorgungsschaltung (10) nach Anspruch 2 oder 3, wobei
die Anlaufsteuerschaltung (13) einen Ableitwiderstand (R5) und einen Schaltstromkreis (131) umfasst, wobei der Ableitwiderstand (R5) und der Schaltstromkreis (131) in Reihe zwischen einem Anlaufkontaktstift der Steuereinheit (111) und einem Massespannungsknoten der Stromversorgungsschaltung (10) geschaltet sind,
wobei der Anlaufkontaktstift mit dem Anlaufwiderstand (R3) verbunden ist,
wobei der Schaltstromkreis (131) konfiguriert ist, um gemäß dem Erfassungsergebnis des Eingangsspannungsdetektors (12) ein- oder einzuschalten.

5. Stromversorgungsschaltung (10) nach Anspruch 4, wobei
der Schaltstromkreis (131) konfiguriert ist, um einzuschalten, wenn das Erfassungsergebnis ist, dass die Eingangsspannung AC-Spannung ist, und
der Schaltstromkreis (131) konfiguriert ist, um auszuschalten, wenn das Erfassungsergebnis ist, dass die Eingangsspannung DC-Spannung ist.

6. Stromversorgungsschaltung (10) nach Anspruch 4 oder 5, wobei
der Schaltstromkreis (131) einen optischen Koppler umfasst.

7. Stromversorgungsschaltung (10) nach Anspruch 1, wobei
die Umwandlungsschaltung (11) einen ersten Eingangsanschluss (Xa1) und einen zweiten Eingangsanschluss (Xa2) umfasst, die konfiguriert sind, um die Eingangsspannung zu empfangen,
der Eingangsspannungsdetektor (12) einen ersten Kondensator (C1) und eine erste Diode (D4) umfasst, die in Reihe zwischen dem zweiten Eingangsanschluss (Xa2) und einem dritten Eingangsanschluss (Xa3) der Anlaufsteuerschaltung (13) geschaltet sind, und
der erste Eingangsanschluss (Xa1) mit einem vierten Eingangsanschluss (Xa4) der Anlaufsteuerschaltung (13) verbunden ist.

8. Stromversorgungsschaltung (10) nach Anspruch 7, wobei
der Eingangsspannungsdetektor (12) ferner eine zweite Diode (D2) umfasst, die zwischen dem ersten Eingangsanschluss (Xa1) und einem Verbindungsknoten des ersten Kondensators (C1) und der ersten Diode (D4) geschaltet ist.

9. Stromversorgungsschaltung (10) nach Anspruch 7, wobei
der Eingangsspannungsdetektor (12) ferner einen zweiten Kondensator (C2) und einen Widerstand (R7) umfasst, der parallel zwischen dem ersten Eingangsanschluss (Xa1) und einem Verbindungsknoten der ersten Diode (D4) und dem dritten Eingangsanschluss (Xa3) geschaltet ist.

10. Elektronische Ausrüstung, umfassend die Stromversorgungsschaltung (10) nach einem der Ansprüche 1 bis 9.

11. Treiber für eine Lichtquelle, umfassend eine Stromversorgungsschaltung (10) nach einem der Ansprüche 1 bis 9.

12. Steuerungsverfahren (200) einer Stromversorgungsschaltung (10), wobei das Verfahren (200) umfasst:
Umwandeln, durch eine Umwandlungsschaltung, von Eingangsspannung in Ausgangsspannung, wobei die Umwandlungsschaltung (11) eine Steuereinheit (111) umfasst, um das Umwandeln zu steuern;
Bereitstellen eines Anlaufstroms für die Steuereinheit zum Starten des Steuerns, wobei der Anlaufstrom durch einen Anlaufwiderstand (R3) fließt;
Erfassen, mit einem Eingangsspannungsdetektor, ob die Eingangsspannung DC-Spannung, Gleichstromspannung, oder AC-Spannung, Wechselstromspannung, ist;
und Steuern des der Steuereinheit (111) bereitgestellten Anlaufstroms mit einem Anlaufsteuerkreis gemäß dem Erfassungsergebnis des Eingangsspannungsdetektors (12).

## Revendications

1. Circuit d'alimentation électrique (10), comprenant :
un circuit de conversion (11), configuré pour convertir une tension d'entrée en une tension de sortie, le circuit de conversion (11) comprenant
un contrôleur (111), configuré pour commander la conversion et
une résistance de démarrage (R3), configurée pour fournir un courant de démarrage circulant à travers la résistance de démarrage (R3) au contrôleur (111) pour démarrer la commande ;
un détecteur de tension d'entrée (12), configuré pour détecter si la tension d'entrée est une tension de courant continu, CC, ou une tension de courant alternatif, CA ; et
un circuit de commande de démarrage (13), configuré pour commander le courant de démarrage fourni au contrôleur (111), en fonction du résultat de détection du détecteur de tension d'entrée (12).

2. Circuit d'alimentation électrique (10) selon la revendication 1, dans lequel,
le circuit de commande de démarrage (13) est configuré pour drainer une partie du courant hors de la résistance de démarrage (R3) lorsque le résultat de la détection est que la tension d'entrée est une tension CA.

3. Circuit d'alimentation électrique (10) selon la revendication 1, dans lequel,
le circuit de commande de démarrage (13) est configuré pour fournir le courant circulant à travers la résistance de démarrage (R3) au contrôleur (111) comme courant de démarrage lorsque le résultat de la détection est que la tension d'entrée est une tension CC.

4. Circuit d'alimentation électrique (10) selon la revendication 2 ou la revendication 3, dans lequel,
le circuit de commande de démarrage (13) comprend une résistance de drainage (R5) et un circuit de commutation (131), la résistance de drainage (R5) et le circuit de commutation (131) sont connectés en série entre une broche de démarrage du contrôleur (111) et un nœud de tension de masse du circuit d'alimentation électrique (10),
dans lequel, la broche de démarrage est connectée à la résistance de démarrage (R3),
le circuit de commutation (131) est configuré pour se désactiver ou s'activer en fonction du résultat de détection du détecteur de tension d'entrée (12).

5. Circuit d'alimentation électrique (10) selon la revendication 4, dans lequel,
le circuit de commutation (131) est configuré pour s'activer lorsque le résultat de la détection est que la tension d'entrée est une tension CA et
le circuit de commutation (131) est configuré pour se désactiver lorsque le résultat de la détection est que la tension d'entrée est une tension CC.

6. Circuit d'alimentation électrique (10) selon la revendication 4 ou la revendication 5, dans lequel,
le circuit de commutation (131) comprend un coupleur optique.

7. Circuit d'alimentation électrique (10) selon la revendication 1, dans lequel,
le circuit de conversion (11) comprend un premier port d'entrée (Xa1) et un deuxième port d'entrée (Xa2), qui sont configurés pour recevoir la tension d'entrée,
le détecteur de tension d'entrée (12) comprend un premier condensateur (C1) et une première diode (D4) connectés en série entre le deuxième port d'entrée (Xa2) et un troisième port d'entrée (Xa3) du circuit de commande de démarrage (13) et
le premier port d'entrée (Xa1) se connecte à un quatrième port d'entrée (Xa4) du circuit de commande de démarrage (13).

8. Circuit d'alimentation électrique (10) selon la revendication 7, dans lequel,
le détecteur de tension d'entrée (12) comprend en outre une deuxième diode (D2) connectée entre le premier port d'entrée (Xa1) et un nœud de connexion du premier condensateur (C1) et de la première diode (D4).

9. Circuit d'alimentation électrique (10) selon la revendication 7, dans lequel,
le détecteur de tension d'entrée (12) comprend en outre un deuxième condensateur (C2) et une résistance (R7) connectés en parallèle entre le premier port d'entrée (Xa1) et un nœud de connexion de la première diode (D4) et du troisième port d'entrée (Xa3).

10. Équipement électronique, comprenant le circuit d'alimentation électrique (10) selon l'une des revendications 1 à 9.

11. Circuit d'attaque pour une source lumineuse comprenant un circuit d'alimentation électrique (10) selon l'une des revendications 1 à 9.

12. Procédé de commande (200) d'un circuit d'alimentation électrique (10), le procédé (200) comprenant :
convertir, par un circuit de conversion, une tension d'entrée en une tension de sortie, moyennant quoi le circuit de conversion (11) comprend un contrôleur (111) pour commander la conversion ;
fournir un courant de démarrage au contrôleur pour démarrer la commande, moyennant quoi le courant de démarrage circule à travers une résistance de démarrage (R3) ;
détecter, avec un détecteur de tension d'entrée, si la tension d'entrée est une tension de courant continu, CC, ou une tension de courant alternatif, CA ;
et commander avec un circuit de commande de démarrage le courant de démarrage fourni au contrôleur (111), en fonction du résultat de détection du détecteur de tension d'entrée (12).
